# EUROPÄISCHE PATENTSCHRIFT

(11) **EP 1 604 106 B1**
(45) Veröffentlichungstag und Bekanntmachung des Hinweises auf die Patenterteilung: **09.08.2006**
(21) Anmeldenummer: 04705050.5
(22) Anmeldetag: 26.01.2004
(51) Int. Cl.: F02M 69/54, G05D 16/08, F16K 15/04

(54) **DRUCKREGLER**
PRESSURE REGULATOR
REGULATEUR DE PRESSION

(30) Priorität: 03.03.2003 DE 10309351
(43) Veröffentlichungstag der Anmeldung: 14.12.2005
(73) Patentinhaber: ROBERT BOSCH GMBH, 70442 Stuttgart (DE)
(72) Erfinder: HAARER, Werner, 75428 Illingen (DE); FEES, Hans-Joerg, 74321 Bietigheim-Bissingen (DE); PEETZ, Andreas, 71640 Ludwigsburg (DE); ITTLINGER, Ralph, 71287 Weissach (DE)
(86) Internationale Anmeldenummer: PCT/DE2004/000110
(87) Internationale Veröffentlichungsnummer: WO 2004/079184

(56) Entgegenhaltungen:
- EP-A- 1 239 145
- WO-A-03/067077
- WO-A-03/102408
- DE-A- 10 107 223

## Beschreibung

### Stand der Technik

Die Erfindung geht aus von einem Druckregler, insbesondere für eine Kraftstoffversorgungsanlage einer Brennkraftmaschine, zum Regeln eines Flüssigkeitsdrucks, beinhaltend ein Ventil, welches ein durch die Wirkung einer winkelig geformten Ventil-Blattfeder gegen einen Ventilsitz in Schließstellung gedrängtes Ventilschließglied umfaßt, wobei ein Arm der Ventil-Blattfeder am Ventilschließglied, der andere Arm an einem Stützglied eines Reglergehäuse abgestützt und die Ventil-Blattfeder im Bereich ihrer Abwinkelung an einem im Reglergehäuse gelagerten Stift gekontert ist, und wobei die Lagerung des Stifts im Reglergehäuse Bohrungen in die Ventil-Blattfeder mit Parallelabstand umgreifenden und im wesentlichen senkrecht zum Stift verlaufenden Seitenwänden des Reglergehäuses beinhaltet, gemäß dem Oberbegriff von Anspruch 1.

Einen solchen Druckregler beschreibt die DE 101 07 223 A1, wobei die Ventil-Blattfeder durch den Stift derart gelenkig gelagert ist, dass an der Ventil-Blattfeder Drehmomentgleichgewicht herrscht. Die an dem Stützglied des Reglergehäuses abgestützte Ventil-Blattfeder ist vorgespannt, wobei die Vorspannkraft auf das Ventilschließglied als Schließkraft wirkt. Hierbei wirkt der Stift als Lagerstelle, welcher die auf die Ventil-Blattfeder wirkenden Kräfte auf das Reglergehäuse überträgt. Wenn an einem Druckeingang des Druckreglers Kraftstoffdruck herrscht, der groß genug ist, um eine gegenüber der auf die Ventilkugel wirkende Schließkraft größere Druckkraft zu erzeugen, hebt das Ventilschließglied vom Ventilsitz ab und gibt einen bestimmten Durchlaßquerschnitt frei, so daß Flüssigkeit, insbesondere Kraftstoff zu einem Druckausgang des Druckreglers strömen kann.

### Vorteile der Erfindung

Durch die Überlappung der Laschen des Stützglieds mit den Seitenwänden ergibt sich eine Versteifung des Reglergehäuses, ohne dass dessen Wandstärke erhöht werden müßte. Insbesondere wird durch die Laschen und den Stift das mittels der Ventil-Blattfeder durch ein Biegemoment belastete Stützglied des Reglergehäuses an die Seitenwände angebunden und dadurch in Belastungsrichtung versteift. Die Seitenwände bilden zusammen mit den Laschen des Stützglieds dann ein Versteifungsdreieck. Der Stift, der eigentlich zum Halten der Ventil-Blattfeder bzw. zum Umlenken der Blattfederkräfte vorgesehen ist, bildet gemäß einer weiteren Funktion nun auch eine formschlüssige und kraftübertragende Verbindung zwischen den Laschen des Stützglieds und den Seitenwänden, ohne dass die Laschen des Stützglieds und die Seitenwände miteinander zusätzlich verbunden sein müßten, beispielsweise durch Verschweißen oder Vernieten, was im übrigen zu höheren Fertigungskosten führen würde.

Insgesamt ergibt sich folglich eine sehr steife und maßhaltige Lagerung des Stifts relativ zum Ventilschließglied, was die Zuverlässigkeit und Funktionssicherheit des Druckreglers vorteilhaft erhöht. Würden anstatt der erfindungsgemäßen Maßnahmen beispielsweise im Bereich des Stützglieds oder der Seitenwände Sicken zur Versteifung angebracht, so wären hiermit Materialverformungen verbunden, welche eine exakte Positionierung des Stiftes in Bezug zum Ventilschließglied schwierig machen würden.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform der Erfindung kontaktieren die Laschen des Stützglieds die Seitenwände und überlappen sie von außen oder von innen her. Zusätzlich wird das Stützglied der Ventil-Blattfeder beispielsweise durch eine Querwand oder Rückwand des Reglergehäuses gebildet und die Laschen sind mit dieser Querwand einstückig ausgebildet und von dieser senkrecht abgekantet. Weiterhin werden die Seitenwände des Reglergehäuses vorzugsweise durch zwei weitere, von einem Bodenteil abgekantete und frei auskragende Laschen gebildet. Dann kann das Reglergehäuse als einstückiges, günstig zu fertigendes Stanzbiegeteil ausgeführt werden, bei welchem nach dem Stanzen eines ebenen Formteils die Bohrungen angebracht und dann lediglich die vier Laschen senkrecht abgekantet werden müssen.

Gemäß einer Weiterbildung dieser Ausführungsform bilden die die Seitenwände des Reglergehäuses bildenden Laschen und/oder die Laschen der Querwand einen Führungskanal für die Ventil-Blattfeder. Durch diese Maßnahme ist eine steife Führung der Ventil-Blattfeder möglich, was sich positiv auf die Zuverlässigkeit und Funktionssicherheit des Druckreglers auswirkt.

Ebenfalls im Sinne einer steifen und zuverlässigen Lagerung der Ventil-Blattfeder ist zusätzlich die Querwand des Reglergehäuses endseitig zur Ventil-Blattfeder hin gebogen und greift in eine nutartige Abkantung der Ventil-Blattfeder ein.

Besonders bevorzugt wird das Ventilschließglied durch eine zwischen dem Ventilsitz und dem einen Arm der Ventil-Blattfeder angeordnete Ventilkugel gebildet, wobei der Ventilkugel und dem einen Arm der Ventil-Blattfeder ein Dämpfungsrings zwischengeordnet ist. Dieser Dämpfungsring kann durch einen aus einem Kunststoff bestehenden Ring mit kreisförmigem Querschnitt ausgeführt sein und sorgt für eine Dämpfung der im Betrieb auftretenden Schwingungen der Ventilkugel, was sich positiv auf die Funktionssicherheit und das Geräuschverhalten des Druckreglers auswirkt. Insbesondere kann der Dämpfungsring aus einem durch spanabhebende Bearbeitung oder durch Spritzgießen hergestellten Kunststoff-Formling bestehen. In beiden Fällen ist die Herstellung und Montage des Dämpfungsrings äußerst einfach, da sie einfache kreisrunde Bauteile darstellen und lediglich zwischen Ventil-Blattfeder und Ventilkugel eingesetzt werden, ohne daß hierzu die Ventil-Blattfeder oder die Ventilkugel verändert werden müßten.

### Zeichnungen

Ein Ausführungsbeispiel der Erfindung ist in der Zeichnung dargestellt und in der nachfolgenden Beschreibung näher erläutert. In den Figuren zeigt :
- Fig.1: eine Querschnittsdarstellung einer bevorzugten Ausführungsform eines Druckreglers gemäß der Erfindung;
- Fig.2: eine Draufsicht auf den Druckregler von Fig. 1;

### Beschreibung des Ausführungsbeispiels

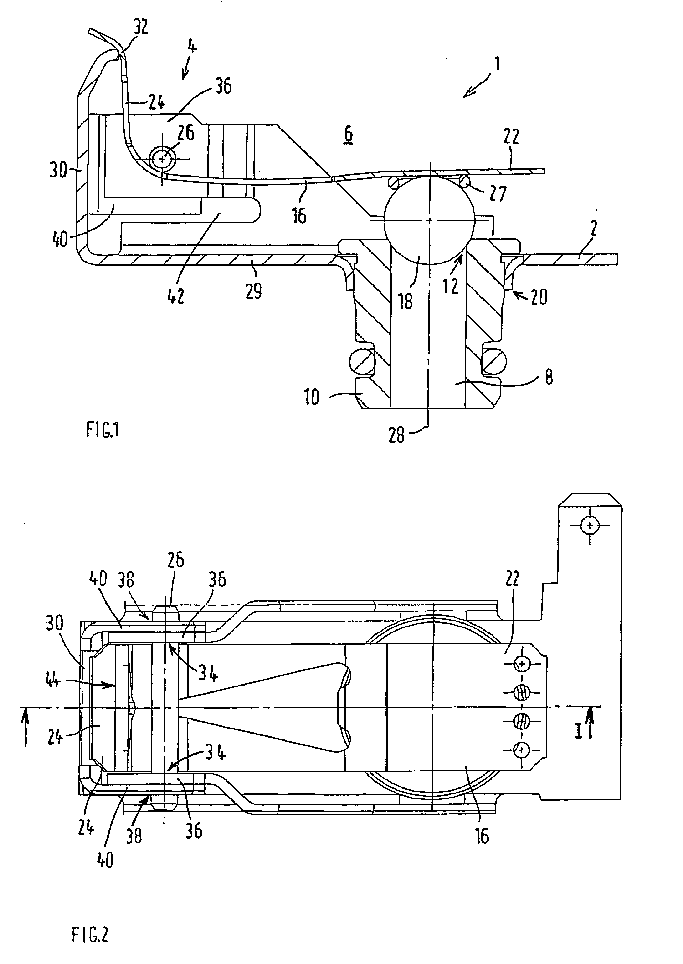

Der in Fig.1 insgesamt mit 1 bezeichnete und dort in einer Schließstellung dargestellte Druckregler ist gemäß einer bevorzugten Ausführungsform an einer aus Maßstabsgründen nicht dargestellten Tankeinbaueinheit oder Filtereinheit eines Kraftfahrzeugs montiert und dient zur Regelung des Kraftstoffdrucks im Kraftstoffsystem einer selbstzündenden Brennkraftmaschine.

Der Druckregler 1 hat ein offenes Reglergehäuse 2 mit L-förmigem Querschnitt, auf welches eine aus Übersichtlichkeitsgründen nicht gezeigte Haube aufgesetzt ist, in welcher ein lediglich durch einen Pfeil angedeuteter Druckausgang 4 ausgebildet ist, welcher einen Innenraum 6 des Reglergehäuses 2 mit dem Kraftstofftank verbindet. Bodenseitig ragt in das Reglergehäuse 2 ein einen Druckeingang 8 bildendes Anschlußstück 10, welches an eine nicht dargestellte Druckleitung des Kraftstoffsystems angeschlossen ist. Das Reglergehäuse 2 ist vorzugsweise ein einstückiges Stanzbiegeteil, in welches das Anschlußstück 10 eingesetzt ist. Alternativ könnte das Reglergehäuse 2 auch als Spritzgußteil gefertigt sein.

An dem Anschlußstück 10 ist endseitig ein Ventilsitz 12 mit einer Kegelfläche zur Zentrierung einer Ventilkugel 18 angeordnet. Anstatt direkt am Anschlußstück 10 kann der Ventilsitz 12 auch am Reglergehäuse 2 ausgebildet sein, in diesem Fall sind das Reglergehäuse 2 und der Ventilsitz 12 beispielsweise als einstückiges, spanabhebend bearbeitetes Spritzgußteil ausgeführt. Der Kegelwinkel der Kegelfläche beträgt beispielsweise 60 Grad. Gegen den Ventilsitz 12 ist aufgrund der Wirkung einer Ventil-Blattfeder 16 die Ventilkugel 18 gedrängt. Die Ventil-Blattfeder 16, die Ventilkugel 18 und der Ventilsitz 12 bilden zusammen ein Überströmventil 20 des Druckreglers 1. Die Ventilkugel 18 kann aus Stahl, Keramik oder Kunststoff bestehen, ihr Durchmesser beträgt vorzugsweise 3 mm bis 12 mm.

Die Ventil-Blattfeder 16 hat vorzugsweise eine winkelige Form, bestehend aus zwei im wesentlichen zueinander rechtwinkelig verlaufenden Armen 22, 24 und ist um eine im Reglergehäuse 2 gelagerten Gelenkachse in Form eines Stifts 26 schwenkbar, welcher quer zur Längserstreckung der Ventil-Blattfeder 16 und senkrecht zu einer die Mittelachse 28 des Ventilsitzes 12 enthaltenden Ebene angeordnet ist. Der Stift 26 übergreift die Ventil-Blattfeder 16 und verläuft in etwa im Bereich der Abwinkelung der Ventil-Blattfeder 16, d.h. im Bereich einer gedachten Stoßlinie der beiden Arme 22, 24 der Ventil-Blattfeder 16. Die Gesamtlänge der aufgewickelten Ventil-Blattfeder beträgt beispielsweise 10 bis 40 mm, ihre Breite etwa 5 mm bis 20 mm. Der Abstand der Mittelachse 28 des Ventilsitzes 12 vom Stift 26 beträgt vorzugsweise 8 mm bis 35 mm.

Zwischen dem ventilsitzseitigen Arm 22 der Ventil-Blattfeder 16, der vorzugsweise senkrecht zur Mittelachse 28 des Ventilsitzes 12 verläuft, und der mit ihrem Scheitel die Ventil-Blattfeder 16 kontaktierenden Ventilkugel 18 ist ein Dämpfungsring 27 angeordnet. Genauer ragt die Ventilkugel 18 mit einem Kugelsegment ihrer zur Ventil-Blattfeder 16 weisenden Kugelhälfte in eine Ringöffnung des Dämpfungsringes 27 hinein und hält ihn dadurch an der Ventil-Blattfeder 16. Der Dämpfungsring 27 hat vorzugsweise einen kreisförmigem Querschnitt und besteht aus einem Kunststoff. Insbesondere kann der Dämpfungsring 27 durch einen durch spanabhebende Bearbeitung oder durch Spritzgießen hergestellten Kunststoff-Formling gebildet werden, dessen zur Ventilkugel 18 weisender Innenrand beispielsweise mit einer Fase versehen ist oder aber eine komplementär zur Ventilkugel 18 ausgebildete, kugelschichtförmige Sitzfläche aufweist. Der Dämpfungsring 27 kann anstatt aus Kunststoff auch aus einem anderen Material, beispielsweise auch aus Stahl oder aus einem Elastomer gefertigt sein. Entscheidend ist, daß sich im Betrieb zwischen dem Dämpfungsring 27, der Ventil-Blattfeder 16 und der Ventilkugel 18 Reibungskräfte bilden, welche einerseits ausreichend groß sind, um Schwingungsbewegungen der Ventilkugel 18 zu dämpfen, welche aber andererseits nicht so groß sind, daß die Zentrierung der Ventilkugel 18 im Ventilsitz 12 behindert wird, wenn das Überströmventil 20 schließt.

Durch die Abstützung des Armes 24 der Ventil-Blattfeder 16 an einem von einer Bodenplatte 29 des Reglergehäuses 2 senkrecht nach oben ragenden Stützglied in Form einer Querwand 30, der Abstützung des anderen Armes 22 an der Ventilkugel 18 und dem Übergriff der Ventil-Blattfeder 16 durch den Stift 26 im Bereich ihrer Abwinkelung wird in der Ventil-Blattfeder 16 eine Vorspannkraft hervorgerufen, welche am ventilsitzseitigen Arm 22 eine die Ventilkugel 18 gegen den Ventilsitz 12 drängende Kraft erzeugt. Entscheidend ist dabei auch die Lage des Stifts 26, welcher die Ventil-Blattfeder 16 gegen die Stützkräfte der Querwand 30 und der Ventilkugel 18 kontert. Weiterhin ergibt sich die Größe der aufgrund der Vorspannung der Ventil-Blattfeder 16 auf die Ventilkugel 18 als Reaktion kopfseitig wirkenden Schließkraft aufgrund der gewählten Hebelverhältnisse der beiden Arme 22, 24. An der Ventil-Blattfeder 16 herrscht dann Drehmomentgleichgewicht.

Um eine stabile Abstützung des Armes 24 der Ventil-Blattfeder 16 zu errreichen und um die Abstützkraft im wesentlichen senkrecht in den Arm 24 der Ventil-Blattfeder 16 einzuleiten, ist die Querwand 30 beispielsweise endseitig zur Ventil-Blattfeder 16 hin gebogen und greift in eine ebenfalls endseitige, nutartige und quer verlaufende Abkantung 32 des Arms 24 der Ventil-Blattfeder 16 ein. Da das Reglergehäuse 2 ein einstückiges Bauteil darstellt, ist auch die Querwand 30 mit der Bodenplatte 29 einstückig.

Die Lagerung des Stifts 26 im Reglergehäuse 2 erfolgt einerseits durch am besten anhand von Fig.2 sichtbaren Bohrungen 34 in die Ventil-Blattfeder 16 mit Parallelabstand umgreifenden und im wesentlichen senkrecht zum Stift 26 verlaufenden Seitenwänden 36 des Reglergehäuses 2, andererseits durch hierzu koaxiale Bohrungen 38 in diese Seitenwände 36 vorzugsweise von außen in Kontakt überlappenden und mit der Querwand 30 des Reglergehäuses 2 verbundenen Laschen 40. Diese Laschen 40 sind mit der Querwand 30 und damit mit dem Reglergehäuse 2 vorzugsweise einstückig ausgebildet sind und von der Querwand 30 senkrecht abgekantet. Anstatt einer Überlappung der Seitenwände 36 durch die Laschen 40 der Querwand 30 von außen könnten die Laschen 40 die Seitenwände 36 auch von innen her überlappend kontaktieren, d.h. dass die Laschen 40 innerhalb der Seitenwände 36 angeordnet und von diesen von außen her umgriffen sind.

Die Seitenwände des Reglergehäuses 2 werden vorzugsweise ebenfalls durch zwei weitere von der Bodenplatte 29 frei auskragende und abgekantete Laschen 36 gebildet, wie am besten Fig.1 zeigt. Zwischen einem zur Querwand 30 weisenden Abschnitt dieser Laschen 36 und der Bodenplatte 29 ist jeweils ein horizontaler Spalt 42 vorhanden, um diese Laschen 36 zueinander derart abgekröpfen zu können, dass sie einen Führungskanal 44 für die Ventil-Blattfeder 16 bilden (Fig.2). Genauer umschließen die Laschen 36 die Ventil-Blattfeder 16 zumindest im Bereich ihrer Abwinkelung mit geringem Spiel. Die Überlappung der Laschen 36, 40 erfolgt vorzugsweise im Bereich der Abkröpfung der Laschen 36. Die als Seitenwände fungierenden Laschen 36 sind außerdem mit den Bohrungen 34 für den Stift 26 versehen. Für die oben erwähnte Alternative, dass die Laschen 40 der Querwand 30 innen und die Laschen 36 der Seitenwände außen angeordnet sind, wird die Ventil-Blattfeder 16 unmittelbar durch die Laschen 40 der Querwand 30 geführt, welche dann den Führungskanal 44 zwischen sich bilden. Denkbar ist außerdem, dass der Führungskanal 44 sowohl durch die Laschen 40 als auch die Laschen 36 gebildet wird, indem auf jeder Seite beide Laschen 30, 40 bezogen auf die Längserstreckung des Führungskanals 44 abschnittsweise die Führungsfunktion übernehmen.

Die aufgrund der Spannung der Ventil-Blattfeder 16 auf die Querwand 30 wirkenden Querkräfte werden folglich über die Laschen 40 und mittels des Stifts 26 auf die als Seitenwände fungierenden Laschen 36 übertragen und von dort in die Bodenplatte 29 eingeleitet. Insbesondere werden die aufgrund der Abstützung der Ventil-Blattfeder 16 an der frei auskragenden Querwand 30 enstehenden Querkräfte als Zugkräfte auf die als Seitenwände fungierenden Laschen 36 übertragen. Der Stift 26 schafft hierbei als Übertragungsglied eine formschlüssige Verbindung zwischen den Laschen 40 der Querwand 30 und den als Seitenwände fungierenden Laschen 36, ohne dass die Laschen 36, 40 darüber hinaus miteinander verbunden sein müßten.

Vor diesem Hintergrund ist die Funktionsweise des Druckreglers 1 wie folgt : Wenn am Druckeingang 8 Kraftstoffdruck herrscht, der groß genug ist, um eine gegenüber der auf die Ventilkugel 18 wirkende Schließkraft größere Druckkraft zu erzeugen, hebt die Ventilkugel 18 vom Ventilsitz 12 ab und gibt einen bestimmten Durchlaßquerschnitt frei, so daß Kraftstoff in den Innenraum 6 des Reglergehäuses 2 und von dort zum Druckausgang 4 strömen kann. Aufgrund der elastischen Eigenschaften der Ventil-Blattfeder 16 steigt der Durchlaßquerschnitt mit größer werdendem Kraftstoffvolumen an, wobei die Druckdifferenz zwischen Druckeingang 8 und Druckausgang demgegenüber nur geringfügig und etwa linear ansteigt.

Die Erfindung ist jedoch nicht auf einen solchen Druckregler beschränkt. Vielmehr kann es sich bei dem erfindungsgemäßen Druckregler auch um einen Druckregler handeln, bei welchem sich die Größe des Ausgangsdrucks von der des Eingangsdrucks unterscheidet und eingestellt werden kann.

## Patentansprüche

1. Druckregler, insbesondere für eine Kraftstoffversorgungsanlage einer Brennkraftmaschine, zum Regeln eines Flüssigkeitsdrucks, beinhaltend ein Ventil, welches ein durch die Wirkung einer winkelig geformten Ventil-Blattfeder (16) gegen einen Ventilsitz (12) in Schließstellung gedrängtes Ventilschließglied (18) umfaßt, wobei ein Arm (22) der Ventil-Blattfeder (16) am Ventilschließglied (18), der andere Arm (24) an einem Stützglied (30) eines Reglergehäuse (2) abgestützt und die Ventil-Blattfeder (16) im Bereich ihrer Abwinkelung an einem im Reglergehäuse (2) gelagerten Stift (26) gekontert ist, und wobei die Lagerung des Stifts (26) im Reglergehäuse (2) Lagerbohrungen (34) in die Ventil-Blattfeder (16) mit Parallelabstand umgreifenden und im wesentlichen senkrecht zum Stift (26) verlaufenden Seitenwänden (36) des Reglergehäuses (2) beinhaltet, **dadurch gekennzeichnet, daß** die Seitenwände (36) zumindest teilweise von mit dem Stützglied (30) des Reglergehäuses (2) verbundenen und mit bezüglich der Lagerbohrungen (34) in den Seitenwänden (36) koaxialen Lagerbohrungen (38) für den Stift (26) versehenen Laschen (40) überlappt sind.

2. Druckregler nach Anspruch 1, **dadurch gekennzeichnet, dass** die Laschen (40) des Stützglieds (30) die Seitenwände (36) kontaktieren und sie von außen oder von innen überlappen.

3. Druckregler nach Anspruch 1 oder 2, **dadurch gekennzeichnet**, das das Stützglied durch eine Querwand (30) oder Rückwand des Reglergehäuses (2) gebildet wird.

4. Druckregler nach Anspruch 3, **dadurch gekennzeichnet, dass** die Laschen (40) mit der Querwand (30) einstückig ausgebildet und von dieser senkrecht abgekantet sind.

5. Druckregler nach Anspruch 4, **dadurch gekennzeichnet, dass** die Seitenwände des Reglergehäuses (2) durch zwei weitere, von einer Bodenplatte (29) abgekantete und frei auskragende Laschen (36) gebildet werden.

6. Druckregler nach Anspruch 4 und 5, **dadurch gekennzeichnet, dass** das Reglergehäuse (2) durch ein einstückiges Stanzbiegeteil gebildet wird.

7. Druckregler nach einem der Ansprüche 5 oder 6, **dadurch gekennzeichnet, dass** die die Seitenwände des Reglergehäuses (2) bildenden Laschen (36) und/oder die Laschen (40) der Querwand (30) einen Führungskanal (44) für die Ventil-Blattfeder (16) bilden.

8. Druckregler nach einem der Ansprüche 3 bis 7, **dadurch gekennzeichnet, dass** die Querwand (30) endseitig zur Ventil-Blattfeder (16) hin gebogen ist und in eine nutartige Abkantung (32) der Ventil-Blattfeder (16) eingreift.

9. Druckregler nach einem der vorhergehenden Ansprüche, **dadurch gekennzeichnet, daß** das Ventilschließglied durch eine zwischen dem Ventilsitz (12) und dem einen Arm (22) der Ventil-Blattfeder (16) angeordnete Ventilkugel (18) gebildet wird.

10. Druckregler nach Anspruch 9, **dadurch gekennzeichnet, dass** der Ventilkugel (18) und dem einen Arm (22) der Ventil-Blattfeder (16) ein Dämpfungsring (27) zwischengeordnet ist.

## Claims

1. Pressure regulator, in particular for a fuel supply system of an internal combustion engine, for regulating a liquid pressure, including a valve which comprises a valve closing member (18) pressed into the closing position against a valve seat (12) by the action of a valve leaf spring (16) of angular form, one arm (22) of the valve leaf spring (16) being supported on the valve closing member (18), the other arm (24) being supported on a supporting member (30) of a regulator housing (2), and the valve leaf spring (16) being locked in the region of its angled portion on a pin (26) mounted in the regulator housing (2), and the mounting of the pin (26) in the regulator housing (2) including mounting holes (34) in side walls (36) of the regulator housing (2), which side walls (36) enclose the valve leaf spring (16) at a parallel distance apart and run essentially at right angles to the pin (26), **characterized in that** the side walls (36) are at least partly overlapped by lugs (40) connected to the supporting member (30) of the regulator housing (2) and provided with mounting holes (38), which are coaxial to the mounting holes (34) in the side walls (36), for the pin (26).

2. Pressure regulator according to Claim 1, **characterized in that** the lugs (40) of the supporting member (30) contact the side walls (36) and overlap them from the outside or from the inside.

3. Pressure regulator according to Claim 1 or 2, **characterized in that** the supporting member is formed by a transverse wall (30) or rear wall of the regulator housing (2).

4. Pressure regulator according to Claim 3, **characterized in that** lugs (40) are formed in one piece with the transverse wall (30) and are folded at right angles from the latter.

5. Pressure regulator according to Claim 4, **characterized in that** the side walls of the regulator housing (2) are formed by two further freely projecting lugs (36) folded from a base plate (29).

6. Pressure regulator according to Claim 4 or 5, **characterized in that** the regulator housing (2) is formed by a one-piece stamped and bent part.

7. Pressure regulator according to either of Claims 5 and 6, **characterized in that** the lugs (36) forming the side walls of the regulator housing (2) and/or the lugs (40) of the transverse wall (30) form a guide passage (44) for the valve leaf spring (16).

8. Pressure regulator according to one of Claims 3 to 7, **characterized in that** the transverse wall (30) is bent at the end towards the valve leaf spring (16) and engages in a groove-like folded portion (32) of the valve leaf spring (16).

9. Pressure regulator according to one of the preceding claims, **characterized in that** the valve closing member is formed by a valve ball (18) arranged between the valve seat (12) and the one arm (22) of the valve leaf spring (16).

10. Pressure regulator according to Claim 9, **characterized in that** a damping ring (27) is arranged between the valve ball (18) and the one arm (22) of the valve leaf spring (16).

## Revendications

1. Régulateur de pression, en particulier pour une installation d'alimentation en carburant d'un moteur à combustion interne, en vue de régler la pression d'un liquide, comprenant une soupape ayant un obturateur (18), pressé en position de fermeture contre un siège de soupape (12) sous l'effet d'un ressort à lame (16) recourbé, dont l'un des bras (22) du ressort à lame (16) s'appuie sur l'obturateur (18) et l'autre bras (24) s'appuie sur un élément de support (30) d'un boîtier de régulateur (2), le ressort à lame (16) étant contré à proximité de sa courbure par une tige (26) logée dans le boîtier de régulateur (2),
et le logement de la tige (26) dans le boîtier de régulateur (2) contenant des alésages de palier (34) dans des parois latérales (36) du boîtier de régulateur (2) qui entourent le ressort à lame (16) avec un écartement parallèle en s'étendant pour l'essentiel perpendiculairement à la tige (26),
**caractérisé en ce que**
les parois latérales (36) sont au moins partiellement recouvertes par des éclisses (40) reliées à l'élément de support (30) du boîtier de régulateur (2) et pourvues d'alésages de palier (38) pour la tige (26), coaxiaux par rapport aux alésages de palier (34) situés dans les parois latérales (36).

2. Régulateur de pression selon la revendication 1,
**caractérisé en ce que**
les éclisses (40) de l'élément de support (30) sont en contact avec les parois latérales (36) et les recouvrent de l'extérieur ou de l'intérieur.

3. Régulateur de pression selon la revendication 1 ou 2,
**caractérisé en ce que**
l'élément de support est formé par une paroi transversale (30) ou une paroi arrière du boîtier de régulateur (2).

4. Régulateur de pression selon la revendication 3,
**caractérisé en ce que**
les éclisses (40) forment une seule pièce avec la paroi transversale (30) et sont repliées perpendiculairement à partir de celle-ci.

5. Régulateur de pression selon la revendication 4,
**caractérisé en ce que**
les parois latérales du boîtier de régulateur (2) sont formées de deux éclisses supplémentaires (36), repliées à partir d'une plaque de base (29) et faisant saillie librement.

6. Régulateur de pression selon la revendication 4 et 5,
**caractérisé en ce que**
le boîtier de régulateur (7) est formé d'un élément plié par estampage et constitué d'une seule pièce.

7. Régulateur de pression selon la revendication 5 ou 6,
**caractérisé en ce que**
les éclisses (36) formant les parois latérales du boîtier de régulateur (2) et/ou les éclisses (40) de la paroi transversale (30) forment un conduit de guidage (44) pour le ressort à lame (16).

8. Régulateur de pression selon l'une des revendication 3 à 7,
**caractérisé en ce que**
la paroi latérale (30) est recourbée, à son extrémité, en direction du ressort à lame (16) et s'engage dans un repli (32) en forme de rainure du ressort à lame (16).

9. Régulateur de pression selon l'une quelconque des revendications précédentes,
**caractérisé en ce que**
l'obturateur est une bille de soupape (18) disposée entre le siège de soupape (12) et l'un des bras (22) du ressort à lames de soupape (16).

10. Régulateur de pression selon la revendication 4,
**caractérisé par**
un anneau amortisseur (27) entre la bille de soupape (18) et l'un des bras (22) du ressort à lames de soupape (16).
